# EUROPÄISCHE PATENTANMELDUNG

(11) **EP 2 128 679 A2**
(43) Veröffentlichungstag der Anmeldung: **02.12.2009**
(21) Anmeldenummer: 09157410.3
(22) Anmeldetag: 06.04.2009
(51) Int. Cl.: G02B 21/24, G02B 21/36

(54) **Mikroskopständer**

(30) Priorität: 09.04.2008 AT 5642008
(71) Anmelder: Photonic Optische Geräte Gesellschaft m.b.H. & Co. KG, 1160 Wien (AT)
(72) Erfinder: Feger, Dieter, 1140, Wien (AT)
(74) Vertreter: Stocker, Kurt

(57) **Zusammenfassung**

Ein Mikroskopständer (3) zur Halterung eines optischen und/oder optronischen Beobachtungs-Systems (5) ist mit einer Mikroskopbasis (4), wie eine Bodenplatte, Füssen oder einem Gestell od. dgl., mechanisch verbunden. Der Mikroskopständer (3) ist zweiteilig ausgebildet, wovon der erste Teil (1) zur Halterung des Beobachtungs-Systems (5) vorgesehen und mit der Mikroskopbasis (4) fest verbunden ist, der zweite Teil (2) im wesentlichen formschlüssig mit dem ersten Teil (1) und vom ersten Teil (1) werkzeugfrei lösbar ausgebildet ist. Dieser zweite Teil (2) weist mindestens einen, vorzugsweise schachtförmigen, Hohlraum (7) auf, in dem zumindest ein elektronischer Bauteil oder eine elektronische Baustufe (8,10,12,13,26,28) vorzugsweise eines elektrischen Lichtquellen-Systems und/oder eines elektronischen Kamera-Systems angeordnet ist. In der Wandung des zweiten Teils (1) ist mindestens eine Öffnung vorgesehen, die als Lichtauslaß (9) für eine im Holraum (7) des zweiten Teils (2) angeordnete Litchtquelle (8) vorgesehen ist.

## Beschreibung

Die Erfindung betrifft einen Mikroskopständer zur Halterung eines optischen und/od. optronischen bzw. opto-elektronischen Beobachtungs-Systems, der mit einer Mikroskopbasis, wie eine Bodenplatte, Füssen oder einem Gestell od. dgl., mechanisch verbunden ist.

Auf der Mikroskopbasis wird unter dem Beobachtungssystem das Objekt angeordnet. Für eine zielführende Untersuchung des Objekts ist eine Beleuchtung erforderlich. Je nach Objekt und Beobachtungsverfahren werden unterschiedlich ausgebildete Beleuchtungseinrichtungen verwendet, die beispielsweise Halogen-Kaltlicht-Spiegellampen, eine od. mehrere Leuchtdioden, od. dgl. als elektrische Lichtquelle verwenden. Derartige bekannte Hochleistungs-Lichtquellen sind in ein eigenes Gehäuse eingebaut, und das Licht wird über einen oder mehrere Lichtleiter an das zu untersuchende Objekt geführt. Die Ausbildung der Lichtquelle als vom Mikroskop entfernt aufstellbares, eigenes Gerät erbringt den Vorteil, dass die sehr starke Wärmeabstrahlung dieser Lichtquellen vom zu untersuchenden Objekt ferngehalten werden kann. Von großem Nachteil ist aber der zusätzliche Platzbedarf für die eigenständige Lichtquelle, da am Arbeitstisch des Laboranten zusätzlich zum Mikroskop ein weiteres Gerät aufgestellt werden muss, auch der mobile Einsatz und der Transport zweier voneinander getrennter Geräte ist aufwendig .

Es ist weiters bekannt, Leuchtdioden nahe am Objekt, am Objektiv des Beobachtungssystems, oder in der Bodenplatte des Mikroskops anzuordnen. Obwohl hiefür nicht Hochleistungs-Leuchtdioden verwendet werden, sondern eine Vielzahl von Standardleuchtdioden, die als Ringlicht oder als sogenanntes Spot-Licht nahe zum Objekt angeordnet werden, strahlen diese Halbleiterlichtquellen Wärme mit hoher Temperatur auf das Objekt. Das Objekt, wird erwärmt, was von großem Nachteil bzw. unzulässig ist. Die Anordnung einer oder mehrerer Lichtquellen in der Bodenplatte bzw. Mikroskopbasis erhöht auch in nachteiliger Weise deren Bauhöhe.

Es ist weiters auch bekannt, Lichtquellen zur Objektbeleuchtung in der Mikroskopbasis, am und im Tragearm für das Beobachtungssystem oder in Lampengehäusen anzuordnen, die am Mikroskopgehäuse ausgebildet sind. Alle diese bekannten Konstruktionen haben den Nachteil, dass eine Erwärmung des Objekts nicht verhindert werden kann, vor allem da die mechanischen Bauteile zur Halterung der Leuchtdioden, der Halogenlampen, od. dgl. Bauteile des Mikroskops sind, die bis nahe an das Objekt reichen und die Wärme daher an das Objekt führen. Es wurde bereits auch vorgeschlagen, diese mechanischen Bauteile des Mikroskops als Kühlkörper für die Lichtquellen zu verwenden, was für die Lebensdauer beispielsweise von Leuchtdioden vorteilhaft, aber für die Untersuchung des Objekts äußerst nachteilig ist.

Der Erfindung liegt die Aufgabe zugrunde, die Nachteile der bekannten Mikroskop-Konstruktionen bzw. Anordnungen zu vermeiden und es wird daher gemäß der Erfindung bei einem Mikroskopständer der eingangs beschriebenen Art vorgeschlagen, dass der Mikroskopständer zweiteilig ausgebildet ist, wobei der erste Teil zur Halterung des Beobachtungs-Systems vorgesehen und mit der Mikroskopbasis verbunden ist, der zweite Teil im wesentlichen formschlüssig mit dem ersten Teil ausgebildet ist, und dass dieser zweite Teil mindestens einen, vorzugsweise schachtförmigen, Hohlraum aufweist, in dem zumindest ein elektronischer Bauteil oder eine elektronische Baustufe vorzugsweise eines elektrischen Lichtquellen-Systems und/oder eines elektronischen Kamera-Systems angeordnet ist. Natürlich kann die Form des Hohlraumes an sich beliebig sein, doch ist die Schachtform - angesichts der beengten Platzverhältnisse - besonders günstig. Durch diese besondere Ausbildung wird in vorteilhafter Weise erreicht, dass während des Betriebes Wärme entwickelnde elektrische od. elektronische Bauteile im Mikroskop derart angeordnet werden können, dass sie weitest entfernt vom zu untersuchenden Objekt sind und hierdurch die Wärmezufuhr an das Objekt minimiert ist.

Weiters ist durch diese besondere, erfindungsgemäße Konstruktion die Möglichkeit gegeben, ausreichend Raum für diverse elektrische bzw. elektronische Einrichtungen, die zum Betrieb des Mikroskops erforderlich sind, in das Mikroskop einzubauen und somit tatsächlich ein kompaktes, einfach transportierbares Gerät zu schaffen, ohne dass die oben beschriebenen Nachteile der bekannten Konstruktionen wirksam werden.

Nach einem weiteren Merkmal der Erfindung wird vorgeschlagen, dass der zweite Teil des Mikroskopständers vom ersten Teil werkzeugfrei lösbar ausgebildet ist und, vorzugsweise, mittels händisch betätigbarem Schnellverschluß am ersten Teil des Mikroskopständers gehalten ist. Diese erfindungsgemäße Konstruktion erbringt den Vorteil, dass in einfachster Weise ein Austausch des zweiten Teils des Mikroskopständers am Arbeitsplatz vorgenommen werden kann. Dies kann erforderlich sein, falls beispielsweise die eingebaute Lichtquelle defekt ist, oder eine Lichtquelle mit anderer lichttechnischer Spezifikation, wie mit anderer Wellenlänge des emittierten Lichtes, für die Untersuchung des Objektes erforderlich ist.

Nach einem weiteren Merkmal der Erfindung kann es je nach konstruktiver Ausbildung des Mikroskops von Vorteil sein, dass der zweite Teil des Mikroskopständers mittels händisch betätigbarem Schnellverschluß auch an der Mikroskopbasis gehalten ist.

In weiterer Ausgestaltung der Erfindung wird vorgeschlagen, dass als Schnellverschluß mindestens ein, vorzugsweise federbelasteter, Klemmhebel, eine lösbare vorzugsweise federbelastete Verrastung, eine mit einer od. mehreren Rändelmuttern versehene Verschraubung, od. dgl. vorgesehen ist. Durch diese Ausbildung des Schnellverschlusses werden der erste und zweite Teil des Mikroskopständers sicher und stabil aber auch lösbar miteinander verbunden. Auch eine Vielzahl oder Kombination dieser genannten Schnellverschlussausbildungen stellt die stabile, aber auch lösbare Verbindung des ersten Teils mit dem zweiten Teil des Mikroskopständers sicher.

Gemäß einem weiteren Merkmal der Erfindung ist vorgesehen, dass zur exakten Positionierung des zweiten Teils des Mikroskopständers an seinem ersten Teil, Führungsstifte und/oder Führungsprofile mit korrespondierenden bzw. komplementären Führungsbohrungen und/oder Führungsnuten vorgesehen sind. Durch diese Konstruktion ist in einfachster Weise ein rasches und präzises Zusammensetzen des Mikroskopständers durchführbar.

In weiterer Ausgestaltung der Erfindung wird vorgeschlagen, dass in der Wandung des zweiten Teils des Mikroskopständers mindestens eine Öffnung vorgesehen ist, die als Lichtauslaß für eine im Hohlraum des zweiten Teils des Mikroskopständers angeordnete Lichtquelle vorgesehen ist. Diese Anordnung von einem od. mehreren Lichtauslässen ermöglicht die Verwendung von vorteilhaft kurzen Lichtleitern und da - unterschiedlich zu einer vom Mikroskop getrennt am Arbeitsplatz aufgestellten Beleuchtungseinrichtung - jeder Lichtauslaß stets in fester Position ist, kann der oder können die Lichtleiter mit dem Mikroskopständer fest verbunden sein.

Ist es aber doch erforderlich, auch Lichtleiter mit unterschiedlicher Länge zu verwenden, so wird gemäß der Erfindung weiters vorgeschlagen, dass der Lichtauslaß zur Aufnahme eines mit einem, vorzugsweise steckerförmigen, Lichtleiter-Endstück versehenen vorzugsweise flexiblen Lichtleiters zur externen Objektbeleuchtung ausgebildet ist.

Nach einem weiteren Merkmal der Erfindung wird vorgeschlagen, dass der zweite Teil des Mikroskopständers in unterschiedlicher Höhe über der Mikroskopbasis am ersten Teil des Mikroskopständers fixierbar ausgebildet ist und an mindestens einem Lichtauslaß des zweiten Teils des Mikroskopständers ein, vorzugsweise schwenkbarer, Arm gelagert ist, der mit einem Lichtleiter ausgerüstet ist und der an seinem anderen Ende faseroptische, ringförmig angeordnete Lichtaustritte zur Objektbeleuchtung aufweist, wobei vorzugsweise bei Anordnung mehrerer schwenkbarer Arme die faseroptischen Lichtaustritte unterschiedliche Neigung zum Objekt aufweisen. Durch diese Konstruktion wird eine mechanisch sehr stabile und mit dem Mikroskopständer verbundene Objektbeleuchtung geschaffen, die in unterschiedlicher Höhe über dem Objekt bzw. unter dem Objektiv des optischen Beobachtungssystems anordenbar ist und je nach Bedarf vom Objekt entfernbar ist, ohne dass sie demontiert werden muss.

Nach einer weiteren Ausführungsform der Erfindung wird vorgeschlagen, dass der Lichtauslaß des zweiten Teils des Mikroskopständers einer Lichteintrittsöffnung im ersten Teil des Mikroskopständers, vorzugsweise axial fluchtend, gegenüberliegend angeordnet ist, wobei in der Lichteintrittsöffnung im ersten Teil des Mikroskopständers die Lichteintrittsfläche eines im Mikroskop, insbesondere in der Mikroskopbasis integrierten Lichtleiters zur Objektbeleuchtung vorgesehen ist. Hierdurch ist es möglich, in einfachster Weise, die Beleuchtung des zu untersuchenden Objekts auch über die Mikroskopbasis bzw. durch ein Fenster in der Mikroskopbasis durchzuführen.

In weiterer Ausgestaltung der Erfindung wird vorgeschlagen, dass am zweiten Teil des Mikroskopständers ein, vorzugsweise schwenkbarer, Haltearm für eine od. mehrere elektrische Lichtquellen oder für ein mit elektrischen Lichtquellen ausgerüstetes Ringlicht zur Objektbeleuchtung lösbar befestigt ist, wobei der Haltearm in unterschiedlicher Höhe über dem Objekt befestigbar ausgebildet ist. Hiedurch kann in einfacher Weise die elektrische Beleuchtung in für die Untersuchung erforderlichen unterschiedlichen Positionen angeordnet werden.

Nach einem weiteren erfindungsgemäßen Merkmal wird vorgeschlagen, dass in der Wandung des zweiten Teils des Mikroskopständers mindestens eine Öffnung vorgesehen ist, die als elektrische Schnittstelle für den Anschluss einer od. mehrerer Lichtquellen, wie Leuchtdioden od.dgl., vorgesehen ist, die vom Mikroskopständer entfernt, im Bereich des zu beobachtenden Objektes angeordnet sind. Durch diese besondere Ausbildung wird in vorteilhafter Weise erreicht, dass die Spannungs- und Stromaufbereitungsstufen für die Lichtquellen, die ebenfalls Wärme entwickeln, möglichst weit vom Objekt angeordnet, aber doch im Mikroskop vorhanden sind. Auch diese Anordnung der Komponenten einer elektrischen Lichtquelle trägt deutlich zur Wärmereduktion im Bereich des zu beobachtenden Objektes bei. Über die elektrische Schnittstelle können dann Leuchtdioden beliebiger Ausbildung, wie mit unterschiedlicher Farblicht-Emission, unterschiedlicher Helligkeit, etc., in einfacher Weise mit im Hohlraum des zweiten Teils des Mikroskopständers angeordneten elektrischen und/oder elektronischen Steuer- und Versorgungsstufen verbunden werden.

Gemäß der Erfindung wird weiters vorgeschlagen, dass im Hohlraum im zweiten Teil des Mikroskopständers mechanische Halteeinrichtungen für modulförmig ausgebildete elektrische und/oder elektronische Bauteile und/oder Baustufen des Lichtquellen-Systems und/oder Video-Kamerasystems vorgesehen sind. Da für viele mikroskopische Untersuchungen unterschiedliche Anforderungen an die Beleuchtung gestellt werden, wie unterschiedliche oder einstellbare Lichtleistung, Farblicht mit unterschiedlicher Wellenlänge, od. dgl., können seitens des Herstellers derartige unterschiedlich spezifizierte Baugruppen als Module ausgebildet werden, was nicht nur die Herstellung kostenmäßig günstig macht, sondern auch die Kombination dieser Baugruppen zur Erreichung der vom Laborant gewünschten speziellen Lichtemission vereinfacht. Um derartige Module in vorteilhaft einfacher Weise im zweiten Teil des Mikroskopständers anordnen zu können, sind im Hohlraum die Halteeinrichtungen für die Module vorgesehen.

Besonders einfach lassen sich die beschriebenen Module miteinander elektrisch verbinden, wenn nach einer bevorzugten Ausführungsform der Erfindung im Hohlraum im zweiten Teil des Mikroskopständers ein Verdrahtungs- und Kontaktierungssystem für modulförmig ausgebildete und einsteckbare elektrische und/oder elektronische Bauteile und/oder Baustufen des Lichtquellen-Systems und/oder elektronischen Kamerasystems vorgesehen ist.

Eine äußerst effiziente Wärmeabfuhr vom Mikroskopständer wird in weiterer Ausgestaltung der Erfindung dadurch erreicht, dass die dem ersten Teil des Mikroskopständers abgewandte Außenwandung des zweiten Teils als Kühlkörper für die im Hohlraum angeordneten elektrischen und/oder elektronischen Bauteile und/oder Baustufen ausgebildet ist.

Um die Erwärmung der Mikroskopbaugruppen Beobachtungssystem, Mikroskopbasis, Objekthalter, od. dgl. durch Wärmeleitung zu unterbinden, wird nach einem weiteren Merkmal der Erfindung vorgeschlagen, dass der zweite Teil des Mikroskopständers thermisch isoliert mit dem ersten Teil verbunden ist.

Um die Wärmeabfuhr von der im Hohlraum angeordneten Lichtquelle bzw. von den elektronischen Baustufen wirkungsvoll zu unterstützen, wird nach einer weiteren Ausführungsform der Erfindung vorgeschlagen, dass der im zweiten Teil vorgesehene Hohlraum Öffnungen für den Ein- und Austritt von Kühlluft aufweist. Da der Hohlraum im zweiten Teil des Mikroskopständers schachtförmig ist, tritt durch die Ausbildung der Eintritts- und Austrittsöffnungen für Luft vorteilhaft ein Kamin-Effekt auf.

In der Mikroskopie ist es oftmals erforderlich, das über das Beobachtungssystem erfasste Bild des Objekts für Dokumenationszwecke, etc. zu speichern. Dies kann durch eine in das Beobachtungssystem integrierte elektronische Video- od. Standbildkamera, aber auch durch eine auf den optischen Ausgang des Beobachtungssystems aufgesetzte Kamera erfolgen. Besonders vorteilhaft kann ein derartiges Kamerasystem in einem Mikroskop angeordnet werden, wenn in weiterer Ausgestaltung der Erfindung der zweite Teil des Mikroskopständers mit einem elektronischen Bildverarbeitungssystem für ein optronisches Beobachtungs- od. Kamerasystem ausgerüstet ist und eine Öffnung für das Einbringen einer mobilen Bild-Speicherkarte aufweist, wobei, vorzugsweise, am zweiten Teil des Mikroskopständers ein Kontroll-Bildschirm ausklappbar und verschwenkbar angeordnet ist. Durch diese besondere bauliche Anordnung wird erreicht, dass alle Wärme entwickelnden elektrischen und elektronischen Baustufen im Mikroskop angeordnet sind, die Erwärmung des Objektes aber vermieden wird.

Um auch bei Anordnung von große Hitze entwickelnde Hochleistungs-Lichtquellen nahe am Objekt anordnen zu können und eine rasche Wärmeabfuhr aus diesem Bereich sicherzustellen, wird nach einer weiteren erfindungsgemäßen Ausführungsform vorgeschlagen, dass im Hohlraum des zweiten Teils des Mikroskopständers ein Kühlgenerator, wie ein motorisch angetriebenes Gebläse vorgesehen ist, dessen Auslass über eine, vorzugsweise rohrförmige, Steckverbindung in der Außenwandung mit einem oder mehreren, vorzugsweise flexiblen, Schläuchen zur Zuführung eines Kühlmediums an mindestens eine, vom Mikroskopständer separiert angeordnete Lichtquelle, insbesondere an mindestens eine Hochleistungs-Leuchtdiode, verbunden ist.

Der Hohlraum im zweiten Teil des Mikroskopständers bietet die Möglichkeit unterschiedlichste Bauteile und Baustufen einer Lichtquelle, eines Kühlsystems, eines optronischen Kamerasystems, od. dgl. anzuordnen. Alle diese Einrichtungen müssen mit elektrischer Energie versorgt werden. Hiezu ist ein Anschlusskabel mit dem allgemeinen Stromnetz oder mit Batterien, Akkumulatoren, etc. zu verbinden. Wird nach einem weiteren Merkmal der Erfindung vorgesehen, dass im Hohlraum des zweiten Teils des Mikroskopständers eine Aufrolleinrichtung für ein Energieversorgungskabel angeordnet ist, so wird in vorteilhafter Weise vermieden, dass das Anschlusskabel in nicht erforderlicher Länge am Tisch des Laboranten liegt. Während des Transport des Mikroskops ist das Anschlusskabel aufgerollt innerhalb des Mikroskops auf kleinstem Raum gelagert.

Nach einem weiteren Merkmal der Erfindung wird vorgeschlagen, dass am Mikroskopständer eine Haltevorrichtung, wie ein schwenkbarer Haltearm, od. dgl. für eine auf das Objekt richtbare Standbild -od. Videokamera lösbar befestigt ist. Hierdurch kann in einfachster Weise eine Kamera für Dokumentationszwecke am Mikroskop stabil befestigt werden.

Die Erfindung ist in den Zeichnungen schematisch in mehreren Ausführungsformen beispielsweise dargestellt. Hierbei zeigen:
- Fig .1 und 2: eine erste Ausführungsform eines Mikroskopständers für ein Mikroskop,
- Fig. 3 und 4: eine zweite Ausführungsform eines Mikroskopständers für ein Mikroskop,
- Fig. 5 und 6: eine dritte Ausführungsform eines Mikroskopständers für ein Mikroskop,
- Fig. 7: eine vierte Ausführungsform eines Mikroskopständers für ein Mikroskop,
- Fig. 8: eine fünfte Ausführungsform eines Mikroskopständers für ein Mikroskop, und
- Fig. 9: die Anordnung modulartiger elektronischer Bauteile bzw. Baustufen im Mikroskopständer.

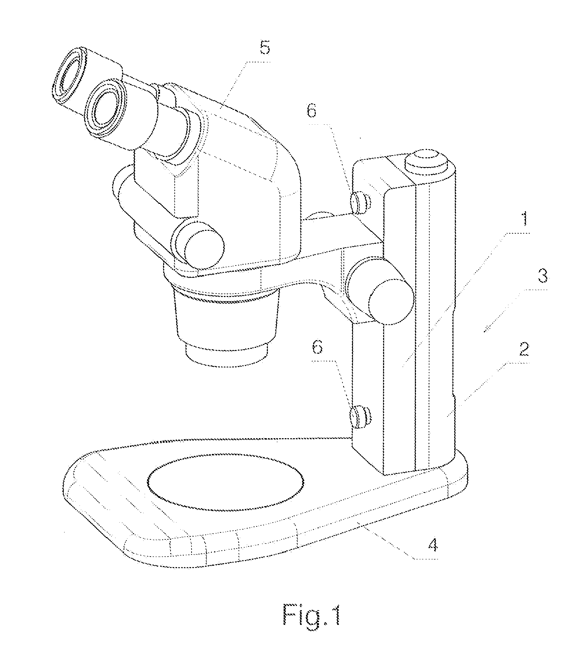

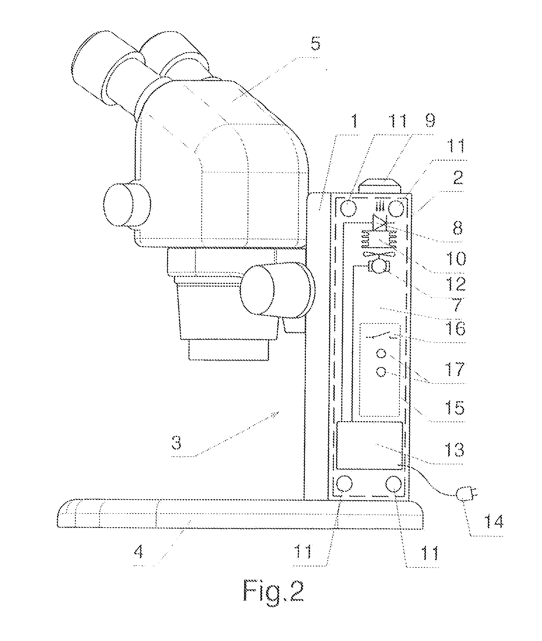

In den Fig. 1 und 2 ist ein Mikroskop als optisches Stereomikroskop dargestellt. An einer als Bodenplatte ausgebildeten Mikroskopbasis 4 ist ein säulenförmiger Mikroskopständer 3 befestigt, an dem ein optisches Beobachtungssystem 5 in seiner Höhe über der Mikroskopbasis 4 einstellbar angeordnet ist.

Der Mikroskopständer 3 ist geteilt ausgebildet und besteht aus dem ersten Teil 1 und aus einem zweiten Teil 2. Der erste Teil 1 ist zur Halterung des optischen Beobachtungssystems 4 vorgesehen und an seiner Unterseite mit der Mikroskopbasis 5 fest verbunden. Der zweite Teil 2 des Mikroskopständers ist mittels Schnellverschluss am ersten Teil 1 lösbar befestigt. Dieser Schnellverschluss wird durch Schrauben 6 gebildet, die mit einer Rändelmutter versehen sind. Der zweite Teil 2 des Mikroskopständers 3 ist dadurch werkzeuglos vom Mikroskop entfernbar. Dieser Schnellverschluss kann auch in nicht dargestellter Weise als federbelasteter, mit einer Klemmschiene zusammenwirkender Klemmhebel, oder als eine federbelastete, lösbare Verrastung ausgebildet sein.

Zusätzlich kann der zweite Teil 2 des Mikroskopständers 3 auch werkzeuglos lösbar mit der Mikroskopbasis 4 mechanisch verbunden sein. Der zweite Teil 2 des Mikroskopständers 3 ist hohl ausgebildet, und dieser Hohlraum 7 erstreckt sich, wie in Fig.2 strichliert gezeichnet, im wesentlichen über die gesamte Höhe des Mikroskopständers 3.

Der Hohlraum 7, gemäß Fig. 2 im zweiten Teil 2 des Mikroskopständers 3, ist schachtförmig ausgebildet, wobei der zweite Teil 2 des Mikroskopständers 3 ein Gehäuse bildet, das formschlüssig zum ersten Teil 1 ist bzw. formschlüssig mit diesem verbunden ist. In diesem schachtförmigen Hohlraum 7 ist eine elektrische Lichtquelle in Form einer Hochleistungsleuchtdioden-Lichtquelle 8 angeordnet, die dem Lichtauslass 9 für den Anschluss eines nicht dargestellten Lichtleiters zur Objektbeleuchtung gegenüberliegt. Diese Lichtquelle 8 ist mit einem Kühlkörper 10 versehen. In der Wandung des zweiten Teils 2 des Mikroskopständers 3 sind Öffnungen 11 ausgebildet, die zur Zufuhr von Frischluft und Abfuhr der durch die Lichtquelle erwärmten Luft vorgesehen sind. Die Anordnung dieser Öffnungen 11 im unteren und oberen Bereich des schachtförmigen Hohlraums 7 unterstützt kaminartig die Zirkulation der Kühlluft. Die Zirkulation der Kühlluft wird durch die Anordnung eines elektromotorischen Gebläses 12 zusätzlich unterstützt.

Zur Energieversorgung der Lichtquelle 8 ist im Hohlraum 7 auch eine Strom- und Spannungsaufbereitungsstufe 13 angeordnet, die über eine Leitung 14 mit dem allgemeinen Stromversorgungsnetz verbunden ist. Alternativ ist die Speisung der elektrischen bzw. elektronischen Bauteile und Baustufen im Mikroskopständer 3 auch durch eine externe Stromquelle, ein externes Niederspannungsgerät, od. dgl. möglich. Ebenso können im Hohlraum 7 des zweiten Teils 2 des Mikroskopständers 3 nicht dargestellte Akkumulatoren oder Batterien angeordnet sein, wodurch es möglich wird, das Mikroskop mobil, falls erforderlich, auch im Freifeld unabhängig von einem Stromversorgungsnetz, zu benützen.

Im Bedienfeld 15 des zweiten Teils 2 des Mikroskopständers 3 sind ein Schalter 16 zur Aktivierung der Lichtquelle 8 und Kontrollsignalleuchten 17 angeordnet.

In nicht dargestellter Weise kann im Hohlraum 7 des Mikroskopständers 3 eine Aufrolleinrichtung für die Leitung 14 eingebaut sein, die motorisch od. händisch betätigbar ist.

Weiters können im Hohlraum 7 elektronische Baustufen eines drahtlosen oder drahtgebundenen Fernbedienungs-Systems für die Lichtquelle 8 angeordnet werden.

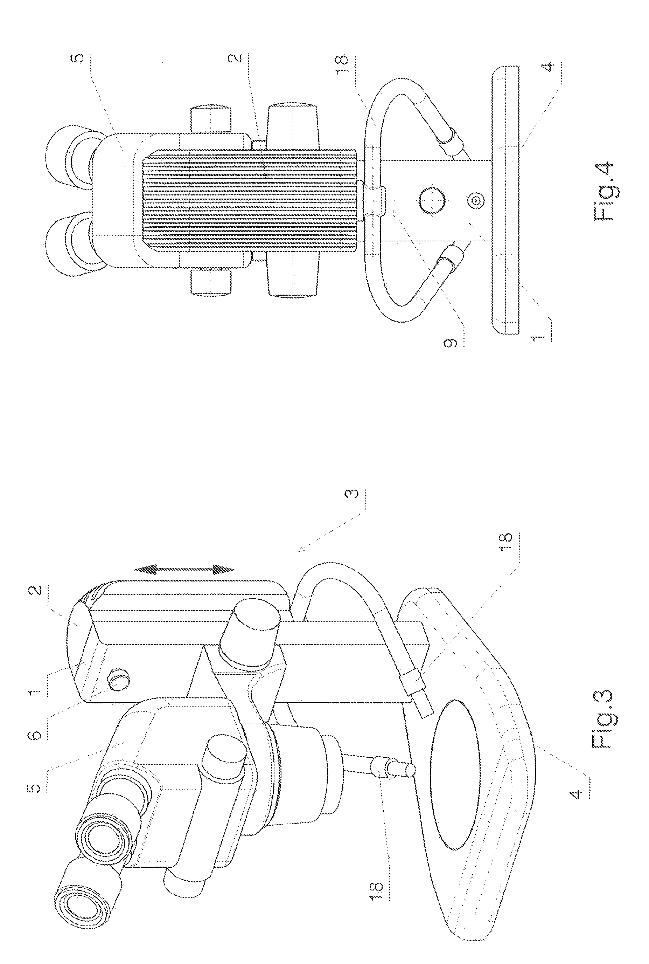

Bei der zweiten Ausführungsform gemäß den Fig. 3 und 4 ist der Mikroskopständer 3 derart beschaffen, dass der zweite, vom ersten Teil 1 lösbare Teil 2 in seiner Bauhöhe gegenüber der Bauhöhe des ersten Teils 1 verkürzt ausgebildet ist. Im nicht dargestellten Hohlraum des zweiten Teils 2 des Mikroskopständers 3 sind die Lichtquelle samt der zugehörigen, wie anhand von Fig. 2 beschrieben, elektrischen und elektronischen Baustufen angeordnet. Im Unterschied zu der Ausführungsform nach den Fig. 1 und 2 ist der Lichtauslaß 9 aber an der der Mikroskopbasis 4 zugewandten Fläche des zweiten Teiles 2 des Mikroskopständers angeordnet. In diesen Lichtauslaß 9 ist ein zweiarmiger flexibler Lichtleiter 18 eingesteckt, der das Licht der im Hohlraum 7 des Mikroskopständers 3 angeordneten Lichtquelle um den das optische Beobachtungssystem 5 tragenden ersten Teil 1 des Mikroskopständers 3 an das Objekt auf der Mikroskopbasis 4 führt.

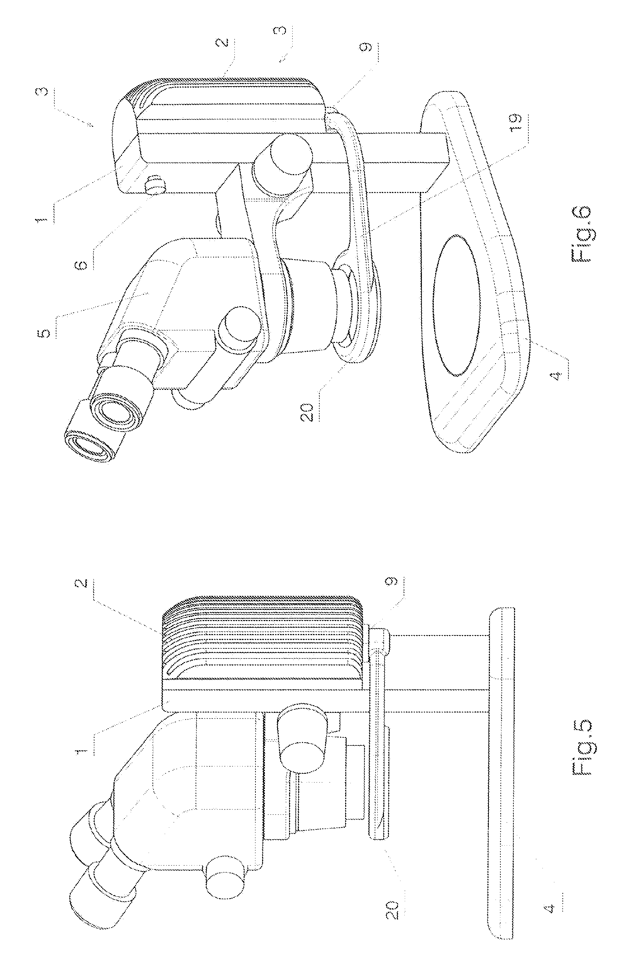

Bei der Ausführungsform gemäß den Fig. 5 und 6 ist die mechanische Ausbildung im Bereich des Lichtaustritts 9 im zweiten Teil 2 des Mikroskopständers 3 gegenüber der Konstruktion nach der Ausführungsform gemäß den Fig.3 und 4 modifiziert ausgebildet. Am Lichtaustritt 9 ist ein im wesentlichen horizontal schwenkbarer Arm 19 gelagert, der hohl ausgebildet ist und einen Lichtleiter aufnimmt, der in das Gehäuse eines faseroptischen Ringlichts 20 für die Beleuchtung des Objekts mündet. Da der zweite Teil 2 des Mikroskopständers 3 in seiner vertikalen Erstreckung kürzer als der erste Teil 1 ausgebildet ist, kann er in unterschiedlicher Höhe über der Mikroskopbasis 4 am ersten Teil 1 positioniert werden. Die Befestigung des zweiten Teiles 2 in unterschiedlicher Höhe über der Mikroskopbasis kann in nicht dargestellter Weise durch eine Vielzahl von höhenmäßig in Abständen zueinander angeordneten Gewindebohrungen für die Schrauben 6 erfolgen.

Es können aber in nicht dargestellter Weise auch mehrere verschwenkbare, mit Lichtleitern ausgerüstete Arme am zweiten Teil 2 des Mikroskopständers 3 angeordnet werden, die beispielsweise beidseitig um den ersten Teil 1 über das Objekt schwenkbar sind. Die Lichtaustritte von Lichtleitern an oder in verschwenkbaren Armen können unterschiedlich geneigt zum Objekt ausgebildet sein, so dass bei unterschiedlicher höhenmäßiger Anordnung des zweiten Teils 2 am ersten Teil 1 des Mikroskopständers 3 Licht optimal ausgerichtet an das zu untersuchende Objekt geführt werden kann.

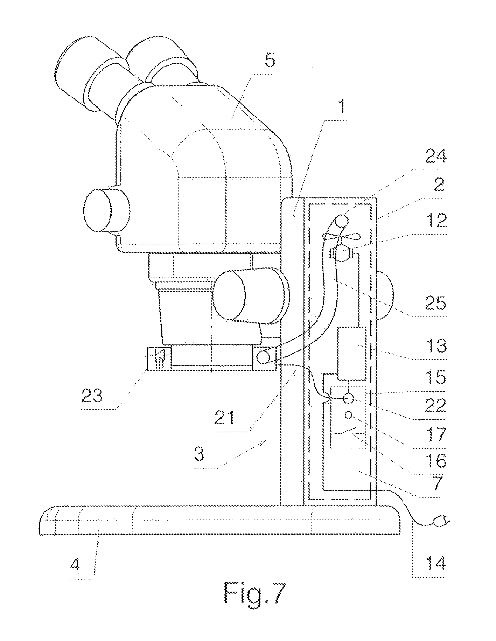

Bei der Ausführungsform gemäß Fig. 7 sind mit Bauteilen der Ausführungsformen gemäß den Fig. 1 bis 6 übereinstimmende Bauteile mit gleichen Bezugsziffern versehen. Im Hohlraum 7 des zweiten Teils 2 des Mikroskopständers 3 ist die elektronische Spannungsaufbereitungstufe 13 angeordnet. Im Bedienfeld 15 befindet sich der Schalter 16, sowie die Einschalt-Kontrollleuchte 17 für die Spannungsaufbereitungsstufe 13. Zusätzlich ist im Bedienfeld 15 eine elektrische Schnittstelle 22 in Form einer Steckbuchse angeordnet, über die, mittels eines elektrischen Kabels 21, eine oder mehrere elektrische, vom Mikroskopständer 3 separiert am Mikroskop 5 angeordnete Lichtquellen mit Energie versorgt werden. Derartige Lichtquellen können als sogenannter LED-Lichtspot und/oder als LED-Ringlicht 23 ausgebildet sein.

Zusätzlich ist im Hohlraum 7 des zweiten Teils 2 des Mikroskopständers 3 das elektromotorisch betriebene Gebläse 12 angeordnet sein, dessen Luftauslass 24 in der Wandung des zweiten Teils 2 vorgesehen ist. Ein am Luftauslaß angeschlossener Luftschlauch 25 führt Kühlluft in das Gehäuse des LED-Ringlichts 23. Anstelle von Kühlluft kann auch ein flüssiges Kühlmedium für die Leuchtdioden verwendet werden. Hiezu kann ein nicht dargestellter Kühlgenerator, wie ein Wärmetauscher und eine Pumpe für das Kühlmedium in den Hohlraum 7 eingebaut werden.

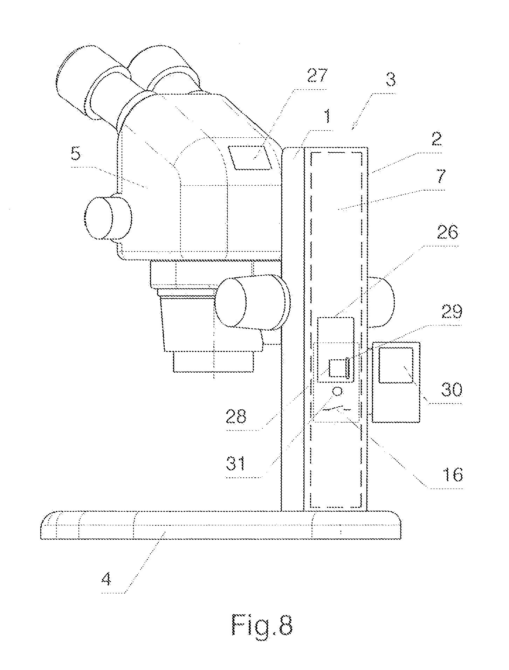

Die Ausführungsform gem. Fig. 8 zeigt ein Mikroskop mit dem zweiteiligen Mikroskopständer 3, wobei im zweiten Teil 2 ein elektronisches Bildverarbeitungssystem 26 eingebaut ist, das mit einem im optischen Beobachtungssystem 5 eingebauten elektronischen Bildsensor 27 über eine nicht dargestellte Signalleitung verbunden ist. Das Bildverarbeitungssystem 26 weist auch nicht dargestellte Kontakte für den Datentransfer an eine externe Bildspeichereinrichtung 28 auf. Diese mobile Bildspeichereinrichtung 28 ist beispielsweise als digitale Speicherkarte ausgebildet und wird durch eine schlitzförmige Öffnung 29 im zweiten Teil 2 des Mikroskopständers 3 an die Kontakte des Bildverarbeitungssystems 26 geführt. Im Bedienfeld 15 ist der Ein/Aus-Schalter 16 für das Bildverarbeitungssystem und eine Taste 29 zur Aktivierung des Datentransfers an die Bildspeicherung 28 angeordnet. Zusätzlich ist ein Kontroll-Bildschirm 30 für das Bildverarbeitungssystem 26 am Mikroskopständer 3 schwenkbar gelagert. Der Kontroll-Bildschirm 30 ist derart ausgebildet ist, dass er in seiner Ruheposition das Bedienfeld 15 abdeckt.

Bei den beschriebenen Ausführungsformen gemäß den Fig. 1 bis 8 können in nicht dargestellter Weise zusätzlich zu den Einrichtungen des Schnellverschlusses zur lösbaren mechanischen Verbindung des ersten Teils 1 mit dem zweiten Teil 2 des Mikroskopständers in einem der Teile 1,2 Führungsstifte, Führungsprofile, od. dgl. angeordnet werden, die mit Führungsbohrungen, Führungsnuten usw. im anderen der Teile 1,2 korrespondieren. Diese mechanischen Führungselemente sind als Positionierungseinrichtung ausgebildet.

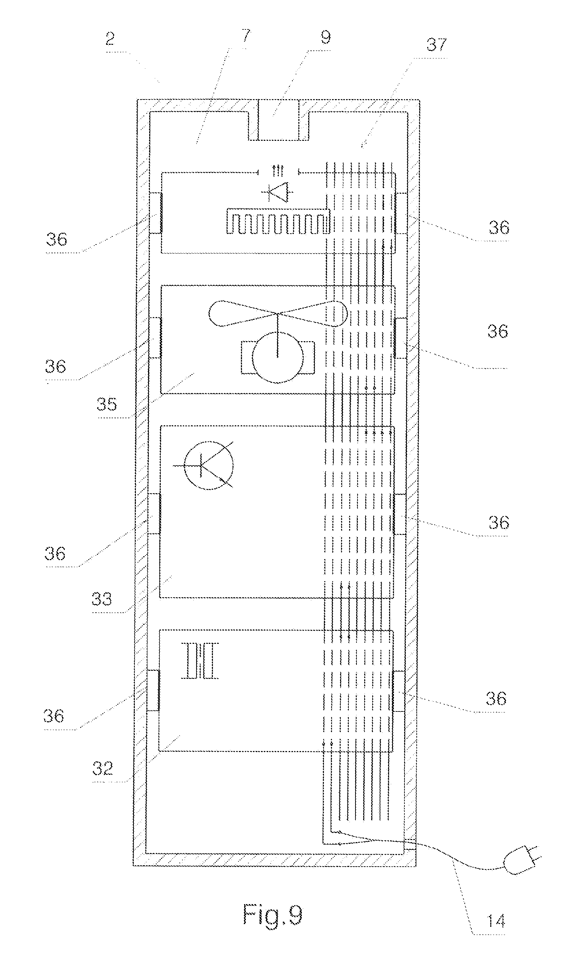

In Fig. 9 ist der zweite Teil 2 des Mikroskopständers 3 teilweise geschnitten dargestellt. Im Hohlraum 7 ist eine Vielzahl von elektrischen Leiterbahnen 31 fest angeordnet. Diese Leiterbahnen 31 bilden ein Verdrahtungs- und Kontaktierungssystem für die elektrischen bzw. elektronischen Einrichtungen, die für den Betrieb des Mikroskops erforderlich sind. Jeweils ein Paar von Leiterbahnen ist einer bestimmten, als Modul ausgebildeten, Baustufe einer Leuchtdioden-Lichtquelle zugeordnet.

Über die Netzleitung 14 und einem ersten Paar von Leiterbahnen 31 wird einem Spannungswandlermodul 32 Energie zugeführt. Der Ausgang der Spannungswandlerstufe 32 ist mit einem weiteren Paar von Leiterbahnen verbunden, die, beispielsweise über Niederspannung, an ein Helligkeitssteuerungs- und Gebläsesteuermodul 33 geführt wird. Die Ausgänge des Helligkeitssteuerungs- und Gebläsemoduls 33 sind über zwei weitere Paare von Leiterbahnen 31 mit einem LED-Lichtquellenmodul 35 und einem elektromotorischen Kühlluftgebläsemodul 34 verbunden. Weitere Leiterbahnen, bspw. zur Verbindung von Schaltern, Einstellreglern od. dgl. zur Steuerung der Lichtquelle sind nicht eingezeichnet.

Die Leiterbahnen erstrecken sich durchgehend nahezu über die gesamte Höhe des Mikroskopständers 3 und somit ist der Hohlraum 7 zum Einbau von einer Vielzahl von Modulen unterschiedlicher Funktion und Baugröße vorbereitet. Die Kontaktierung der Module 32 bis 35 mit den Leiterbahnen erfolgt durch Kontaktstifte, die händisch lösbar sind. Zur mechanischen Halterung der Module 23 bis 35 sind Klammern 36 oder nicht dargestellte Verschraubungen vorgesehen.

Die Erfindung ist auf die beschriebenen Ausführungsbeispiele nicht beschränkt. Es liegt beispielsweise im Rahmen der Erfindung, auch einen Lichtaustritt für die im Hohlraum 7 angeordnete Lichtquelle derart anzuordnen, dass ein Lichtaustritt im zweiten Teil 2 zum ersten Teil 1 des Mikroskopständers 3 ausgerichtet ist und einem Lichteintrittsfenster für einen im ersten Teil 1 oder in der Mikroskopbasis 4 fest angeordneten Lichtleiter, beispielsweise zur Beleuchtung eines Objekts von unten durch ein Fenster in der Bodenplatte, gegenüberliegt.

Zwischen erstem Teil 1 und zweitem Teil 2 des Mikroskopständers 3 kann eine Wärmeschutzschicht oder eine andere thermische Abschirmung angeordnet werden, um den zweiten Teil 2 thermisch von den anderen Mikroskopbauteilen zu isolieren.

## Patentansprüche

1. Mikroskopständer zur Halterung eines optischen und/oder optronischen Beobachtungs-Systems, der mit einer Mikroskopbasis, wie eine Bodenplatte od. dgl., mechanisch verbunden ist, **dadurch gekennzeichnet, dass** der Mikroskopständer (3) zweiteilig ausgebildet ist, wobei der erste Teil (1) zur Halterung des Beobachtungs-Systems (5) vorgesehen und mit der Mikroskopbasis (4) fest verbunden ist, der zweite Teil (2) im wesentlichen formschlüssig mit dem ersten Teil (1) ausgebildet ist und dass dieser zweite Teil (2) mindestens einen, vorzugsweise schachtförmigen, Hohlraum (7) aufweist, in dem zumindest ein elektronischer Bauteil oder eine elektronische Baustufe (8, 10, 12, 13, 26, 28), vorzugsweise eines elektrischen Lichtquellen-Systems und /oder eines elektronischen Kamera-Systems angeordnet ist.

2. Mikroskopständer nach Anspruch 1, **dadurch gekennzeichnet, dass** der zweite Teil (2) vom ersten Teil (1) des Mikroskopständers (3) werkzeugfrei lösbar ausgebildet ist und, vorzugsweise, mittels händisch betätigbarem Schnellverschluß (6) am ersten Teil (1) des Mikroskopständers (3) gehalten ist, und dass vorzugsweise der zweite Teil (2) des Mikroskopständers (3) mittels eines händisch betätigbaren Schnellverschlusses an der Mikroskopbasis (4) gehalten ist.

3. Mikroskopständer nach Anspruch 2, **dadurch gekennzeichnet, dass** als Schnellverschluß mindestens ein, vorzugsweise federbelasteter, Klemmhebel, eine lösbare, vorzugsweise federbelastete, Verrastung, eine mit einer od. mehreren Rändelmuttern versehene Verschraubung (6), od. dgl. vorgesehen ist.

4. Mikroskopständer nach mindestens einem der vorhergehenden Ansprüche, **dadurch gekennzeichnet, dass** zur exakten Positionierung des zweiten Teiles (2) des Mikroskopständers (3) an seinem ersten Teil (1), Führungsstifte und/oder Führungsprofile mit korrespondierenden Führungsbohrungen und/oder Führungsnuten vorgesehen sind.

5. Mikroskopständer nach mindestens einem der vorhergehenden Ansprüche, **dadurch gekennzeichnet, dass** in der Wandung des zweiten Teils (2) des Mikroskopständers (3) mindestens eine Öffnung vorgesehen ist, die als Lichtauslaß (9) für eine im Hohlraum (7) des zweiten Teils (2) des Mikroskopständers (3) angeordnete Lichtquelle (8) vorgesehen ist.

6. Mikroskopständer nach Anspruch 5, **dadurch gekennzeichnet, dass** jeder Lichtauslaß (9) zur Aufnahme eines mit einem, vorzugsweise steckerförmigen, Lichtleiter-Endstück versehenen, vorzugsweise flexiblen, Lichtleiters (18) zur externen Objektbeleuchtung ausgebildet ist.

7. Mikroskopständer nach Anspruch 5 oder 6, **dadurch gekennzeichnet, dass** der zweite Teil (2) des Mikroskopständers (3) in unterschiedlicher Höhe über der Mikroskopbasis (4) am ersten Teil (1) des Mikroskopständers (3) fixierbar ausgebildet ist und an mindestens einem Lichtauslaß (9) des zweiten Teils (2) des Mikroskopständers (3) ein, vorzugsweise schwenkbarer, Arm (19) gelagert ist, der mit einem Lichtleiter ausgerüstet ist und der an seinem anderen Ende faseroptische, ringförmig angeordnete Lichtaustritte (20) zur Objektbeleuchtung aufweist, wobei vorzugsweise, bei Anordnung mehrerer schwenkbarer Arme (19), die faseroptischen Lichtaustritte unterschiedliche Neigung zum Objekt aufweisen.

8. Mikroskopständer nach einem der Ansprüche 5 bis 8, **dadurch gekennzeichnet, dass** der Lichtauslaß des zweiten Teiles (2) des Mikroskopständers (3) einer Lichteintrittsöffnung im ersten Teil (1) des Mikroskopständers (3), vorzugsweise axial fluchtend, gegenüberliegend angeordnet ist, wobei in der Lichteintrittsöffnung im ersten Teil (1) des Mikroskopständers (3) die Lichteintrittsfläche eines im Mikroskop, insbesondere in der Mikroskopbasis (4), integrierten Lichtleiters vorgesehen ist.

9. Mikroskopständer nach mindestens einem der Ansprüche 1 bis 8, **dadurch gekennzeichnet, dass** in der Wandung des zweiten Teils (2) des Mikroskopständers (3) mindestens eine Öffnung vorgesehen ist, die als elektrische Schnittstelle (22) für den Anschluß einer oder mehrerer Lichtquellen, wie Leuchtdioden (23), od.dgl., vorgesehen ist, die vom Mikroskopständer (3) entfernt, im Bereich des zu beobachtenden Objektes angeordnet sind, und dass vorzugsweise am zweiten Teil (2) des Mikroskopständers (3) ein, insbesondere schwenkbarer, Haltearm für eine od. mehrere elektrische Lichtquellen oder für ein mit elektrischen Lichtquellen ausgerüstetes Ringlicht zur Objektbeleuchtung lösbar befestigt ist, wobei der Haltearm in unterschiedlicher Höhe über dem Objekt befestigbar ausgebildet ist
und/oder dass
im Hohlraum (7) des zweiten Teils (2) des Mikroskopständers (3) ein Kühlgenerator, wie ein motorisch angetriebenes Gebläse (12) vorgesehen ist, dessen Auslaß für ein Kühlmedium über eine, vorzugsweise rohrförmige, Steckverbindung (24) in der Außenwandung mit einem od. mehreren, vorzugsweise flexiblen, Schläuchen (25) zur Zuführung des Kühlmediums an mindestens eine, vom Mikroskopständer (3) separiert angeordnete Lichtquelle, insbesondere an mindestens eine Hochleistungs-Leuchtdiode (23), verbunden ist.

10. Mikroskopständer nach mindestens einem der vorhergehenden Ansprüche, **dadurch gekennzeichnet, dass** im Hohlraum (7) wenigstens eine der folgenden Einrichtungen angeordnet ist:
a) im zweiten Teil (2) des Mikroskopständers (3) sind mechanische Halteeinrichtungen (36) für modulförmig ausgebildete elektrische und/oder elektronische Bauteile und/oder Baustufen (32, 33, 34, 35) des Lichtquellen-Systems und/oder des elektronischen Kamerasystems vorgesehen;
b) im Hohlraum (7) des zweiten Teils (2) des Mikroskopständers (3) ist eine Aufrolleinrichtung für ein Energieversorgungskabel (14) angeordnet;
c) im Hohlraum (7) im zweiten Teil (2) des Mikroskopständers (3) ist ein Verdrahtungs- und Kontaktierungssystem (31) für modulförmig ausgebildete und einsteckbare elektrische und/oder elektronische Bauteile und/oder Baustufen (32, 33, 34, 35) des Lichtquellen-Systems und/oder elektronischen Kamerasystems vorgesehen.

11. Mikroskopständer nach mindestens einem der vorhergehenden Ansprüche, **dadurch gekennzeichnet, dass** die dem ersten Teil (1) des Mikroskopständers (3) abgewandte Außenwandung des zweiten Teils (2) als Kühlkörper für die im Hohlraum (7) angeordneten elektrischen und/oder elektronischen Bauteile und/oder Baustufen (8, 10, 12, 13, 26, 28, 32, 33, 34, 35) ausgebildet ist.

12. Mikroskopständer nach mindestens einem der vorhergehenden Ansprüche, **dadurch gekennzeichnet, dass** der zweite Teil (2) des Mikroskopständers (3) thermisch isoliert mit dem ersten Teil verbunden ist.

13. Mikroskopständer nach mindestens einem der vorhergehenden Ansprüche, **dadurch gekennzeichnet, dass** der im zweiten Teil (2) vorgesehene Hohlraum (7) Öffnungen (11) für den Ein- und Austritt von Kühlluft aufweist.

14. Mikroskopständer nach mindestens einem der vorhergehenden Ansprüche, **dadurch gekennzeichnet, dass** der zweite Teil (2) des Mikroskopständers (3) mit einem elektronischen Bildverarbeitungssystem (26) für ein optronisches Bildverarbeitungssystem (27) ausgerüstet ist und ein Speichermittel, bevorzugt mit einer Öffnung (29) für das Einbringen einer mobilen Bild-Speicherkarte (28) aufweist, wobei vorzugsweise am zweiten Teil (2) des Mikroskopständers 3 ein Kontroll-Bildschirm (30) ausklappbar und verschwenkbar angeordnet ist.

15. Mikroskopständer nach mindestens einem der vorhergehenden Ansprüche, **dadurch gekennzeichnet, dass** am Mikroskopständer (3) eine Haltevorrichtung, wie ein schwenkbarer Haltearm od. dgl., für eine Standbild- od. Videokamera lösbar befestigt ist.
